# EUROPÄISCHE PATENTSCHRIFT

(11) **EP 0 693 907 B1**
(45) Veröffentlichungstag und Bekanntmachung des Hinweises auf die Patenterteilung: **05.03.1997**
(21) Anmeldenummer: 94913118.9
(22) Anmeldetag: 05.04.1994
(51) Int. Cl.: A61C 1/05

(54) **WINKELSTÜCK FÜR DEN ZAHNÄRZTLICHEN BEDARF**
ELBOW FOR DENTAL TOOL-HOLDER
PIECE COUDEE POUR PORTE-OUTILS DENTAIRES

(30) Priorität: 05.04.1993 DE 4310798; 11.05.1993 DE 4315596
(43) Veröffentlichungstag der Anmeldung: 31.01.1996
(73) Patentinhaber: Janert, Rolf, D-71546 Aspach (DE); RIESCH, Hans-Curt, D-75173 Pforzheim (DE); LEITER, Alfred, D-75175 Pforzheim (DE)
(72) Erfinder: LEITER, Alfred, D-75175 Pforzheim (DE)
(74) Vertreter: Twelmeier, Ulrich, Dipl.Phys.
(86) Internationale Anmeldenummer: EP9401059
(87) Internationale Veröffentlichungsnummer: WO9422387

(56) Entgegenhaltungen:
- EP-A- 0 374 276
- EP-A- 0 455 452
- WO-A-92/10144
- US-A- 3 762 052
- US-A- 3 871 097

## Beschreibung

Die Erfindung geht aus von einem Winkelstück mit den im Oberbegriff des Anspruchs 1 angegebenen Merkmalen. Solche Winkelstücke benötigt der Zahnarzt für Bohr-, Schleif- und Fräsarbeiten an Zähnen und Kieferknochen. Das Winkelstück enthält Getriebeelemente für den Drehantrieb einer Spannvorrichtung, welche im Kopfteil des Winkelstücks angeordnet ist und zum Einspannen des Werkzeugs dient. Es ist bekannt, die Spannvorrichtung als Spannzange auszubilden, in welcher das Werkzeug durch Federkraft festgelegt wird. Es ist ferner bekannt, die Spannzange durch einen an der Rückseite des Kopfteils vorgesehenen Druckknopf zu betätigen; dazu ist zwischen dem Druckknopf und der Spannzange eine verschiebbare Hülse vorgesehen, welche mit ihrem keilförmigen vorderen Ende in die Spannzange eingreift und sie spreizt, wenn der Druckknopf niedergedrückt wird.

Inbesondere bei kieferchirurgischen Arbeiten ist es wichtig, darauf zu achten, dass das Werkzeug nicht zu heiß wird, denn bei Temperaturen ab ungefähr 40-42°C beginnt das Knochengewebe abzusterben und Implantate wachsen nicht mehr ein. Das bekannte Winkelstück hat deshalb an der Vorderseite des Kopfteils einen ringförmigen Deckel mit einer, zwei oder drei Düsen, denen durch eine im Schaftteil des Winkelstücks verlaufende Zuleitung Wasser zugeführt wird, welches durch die Düsen von aussen gegen das Werkzeug gesprüht wird.

Eine wirksamere Kühlung ermöglichen jedoch Werkzeuge, die von innen gekühlt sind und zu diesem Zweck eine längs durchgehende Bohrung haben. Innen gekühlte Werkzeuge haben gegenüber von aussen gekühlten Werkzeugen darüberhinaus den Vorteil, dass sie nur wenig Wasser abschleudern, wodurch sonst Keime im Mundraum und ausserhalb des Mundraumes verteilt werden können, die der Zahnarzt und sein Hilfspersonal einatmen müssen.

Es ist bekannt, innen gekühlten Werkzeugen das Wasser mittels eines Schlauches zuzuführen, der von der Rückseite her in das Kopfteil des Winkelstücks hineingeführt ist. Nachteilig dabei ist es, dass der zur Rückseite aus dem Kopfteil herausführende Schlauch bei Arbeiten im Mund hinderlich ist und dass die Spannvorrichtung nicht durch einen Druckknopf betätigt werden kann; es ist für diesen Fall vielmehr bekannt, eine Spannzange vorzusehen, die mittels eines Schwenkhebels geöffnet und geschlossen werden kann. Der Schlauch endet im Winkelstück auf einem Röhrchen, über welches das durchbohrte Werkzeug mit seiner Bohrung geschoben werden muss, wenn das Werkzeug in das Winkelstück eingesetzt wird. Da das Werkzeug ohnehin sehr dünn ist, gestaltet sich das Einsetzen und Auffädeln des Werkzeugs auf das Kühlwasserröhrchen bei geöffneter Spannzange recht mühsehlig.

Ein Winkelstück mit den im Oberbegriff des Anspruchs 1 angegebenen Merkmalen ist aus der EP-A-374 276 bekannt. Es dient zur Aufnahme eines längs durchbohrten Werkzeugs, dem das Kühlwasser durch eine in einem Druckknopf verlaufende Zuleitung hindurch zugeführt wird; der Druckknopf hat einen zentralen Fortsatz, welcher dem hinteren Ende des Werkzeugs gegenüberliegt. Dabei verläuft die Zuleitung zwar vollständig im Innern des Winkelstücks, doch wird das mit erheblichem baulichen und Dichtungsaufwand erkauft.

Der vorliegenden Erfindung liegt die Aufgabe zugrunde, ein Winkelstück zu schaffen, welches mit innen gekühlten Werkzeugen betrieben werden kann, aber in der Handhabung und im Aufbau möglichst einfach ist.

Diese Aufgabe wird gelöst durch ein Winkelstück mit den im Patentanspruch 1 angegebenen Merkmalen. Vorteilhafte Weiterbildungen der Erfindung sind Gegenstand der abhängigen Ansprüche.

Die erfindungsgemässe Lösung ist überraschend einfach. Erreicht wird das dadurch, dass dem Werkzeug das Kühlmittel durch den Zwischenraum zwischen Unterteil und Oberteil eines zweigeteilten Druckknopfes zugeführt wird, welchem auf diese Weise eine mehrfache Funktion zugewiesen wird, nämlich die Spannvorrichtung zu betätigen, eine Leitungsverbindung zum hinteren Ende des Werkzeugs herzustellen, dabei das Gehäuse nach aussen dicht abzuschließen und den Innenraum des Kopfteils gegen den im Zwischenraum des Druckknopfs verlaufenden Zuleitungsabschnitt abzuschließen. Eine durch O-Ring abgedichtete Gleitführung zwischen Druckknopf und Gehäuse, wie aus der EP-A-374 276 bekannt, ist nicht erforderlich, vielmehr kann der Druckknopf ein einfaches, flaches Kunststoffteil sein, welches das Gehäuse rückseitig nach Art einer Kappe hermetisch abschließt. Dadurch wird einerseits die Abdichtung verbessert und andererseits die Herstellung und Montage vereinfacht.

Trotz der Kleinheit des Winkelstücks und des Druckknopfes, die wegen des zahnärztlichen Einsatzzweckes unvermeidlich vorgegeben ist, ist es möglich, die Kühlmittelzuleitung im Knopfteil durch den Zwischenraum des Druckknopfs hindurchzuführen, weil bei den benötigten Kühlmittelmengen von weniger als 50 ml/min. mit geringen Leitungsquerschnitten gearbeitet werden kann. Im Ergebnis erhält man ein Winkelstück, welches äußerlich so aussehen kann wie das bekannte Winkelstück mit aussen gekühltem Werkzeug, bei welchem jedoch kein Schlauch am Kopfteil die zahnärztlichen Arbeiten behindert und bei dem ein Werkzeugwechsel einfach durch Druck auf den rückseitigen Druckknopf möglich ist.

Der Druckknopf hat an seiner Unterseite vorzugsweise einen in der Flucht der Spannvorrichtung liegenden Fortsatz, durch welchen die Zuleitung für das Kühlmittel hindurchführt. Um eine Leitungsverbindung mit dem Werkzeug herzustellen, erstreckt sich bei eingesetztem Werkzeug der Fortsatz bis in die Bohrung des Werkzeuges oder erstreckt sich das Werkzeug mit seinem hinteren Ende bis in den Fortsatz hinein, so dass entweder das Werkzeug den Fortsatz oder der Fortsatz das Werkzeug nach Art einer Muffe umschließt. Da sich der Fortsatz in der Flucht der Spannvorrichtung befindet, kann das Werkzeug mit seinem hinteren Ende leicht auf den Fortsatz des Druckknopfes aufgefädelt werden, denn die Spannvorrichtung führt das Werkzeug direkt in die Flucht des Fortsatzes, wobei während des Einführens des Werkzeuges durch Reduzieren des Drucks der mit dem Daumen der das Handstück haltenden Hand auf den Druckknopf ausgeübt wird die Spannzange soweit geschlossen werden kann, dass das Werkzeug nahezu spielfrei eingeschoben werden kann, wodurch es in der gewünschten Weise auf den Fortsatz zentriert wird.

Um die nötige Dichtheit der Leitungsverbindung zu erreichen, kann man einfach für eine hinreichend lange Überlappung von Fortsatz und Werkzeug sorgen; dazu wird entweder das Werkzeug vom hinteren Ende auf entsprechender Länge aufgebohrt, um den Fortsatz in der gewünschten Länge aufzunehmen, oder der Fortsatz hat einen vergrößerten Innendurchmesser in entsprechender Länge, um das hintere Ende des Werkzeugs in der gewünschten Länge aufzunehmen. Man kann aber auch mit einer kürzeren Überlappung von Fortsatz und Werkzeug eine hinreichende Dichtigkeit erreichen, wenn man in dem Fall, dass der Fortsatz in die Bohrung des Werkzeugs eingeführt wird, den Fortsatz an seinem vorderen Ende aussenseitig mit einer Wulst versieht, deren Aussendurchmesser auf Passung mit der Bohrung im Werkzeug gearbeitet ist; für den Fall, dass das Werkzeug mit seinem hinteren Ende in den Fortsatz eingeführt werden soll, erreicht man ähnliches, indem man am hinteren Ende des Werkzeugs aussenseitig eine Ausnehmung vorsieht, in welche ein dazu passender, auf der Innenseite des Fortsatzes gebildeter Vorsprung einrastet und dadurch das Werkzeug dicht umschließt. Dabei kann und sollte in Längsrichtung des Fortsatzes zwischen diesem und dem Werkzeug ein Spiel vorhanden sein, um trotz Ineinandergreifens von Fortsatz und Werkzeug ein müheloses Lösen der Spannvorrichtung zu gewährleisten.

Der Druckknopf besteht zweckmässigerweise aus thermoplastischem Kunststoff, der auf der Aussenseite metallisiert sein kann. Das hat nicht nur den Vorteil, dass er leicht wasserdicht in das Gehäuse des Winkelstücks eingepreßt, eingeschraubt oder eingeklebt werden kann, sondern auch, dass er nicht als Ganzes beweglich gelagert sein muss, sondern die Druckbetätigung durch Auslenken eines dünneren, nachgebenden Mittelteils des Druckknopfs bewirkt werden kann. In diesem Fall ist es von Vorteil, in den Fortsatz des Druckknopfes aus Gründen der Stabilität und der Maßhaltigkeit ein vorspringendes Metallröhrchen einzufügen, welches eingeklebt oder eingespritzt oder eingepreßt sein kann.

Der thermoplastische Druckknopf ist zweiteilig ausgebildet und besteht demgemäss aus einem im Gehäuse befestigten Unterteil und aus einem Oberteil, welches ebenfalls unmittelbar im Gehäuse befestigt sein kann, vorzugsweise aber im Unterteil befestigt, beispielsweise am Rand eingeklebt, insbesondere eingepreßt ist. Bei einem solchen zweiteiligen Druckknopf kann man den durch ihn hindurchführenden Abschnitt der Zuleitung für das Kühlmittel besonders einfach verwirklichen, indem man ihn zwischen Unterteil und Oberteil verlaufen läßt, von wo aus er den Druckknopf durch die Mitte des Unterteils durch dessen Fortsatz hindurch verläßt. Zugleich erreicht man dadurch ohne Schwierigkeit genügend Flexibilität für die Druckknopffunktion. Der Druckknopf könnte aber auch aus Metall bestehen, wenn durch hinreichend dünne Wandstärke dafür gesorgt ist, dass er wie eine Membran ausgelenkt werden kann.

An welcher Stelle man die Zuleitung aus dem Gehäuse des Winkelstücks aus- und in den Druckknopf eintreten läßt, wird vom konstruktiven Aufbau des Winkelstücks in seinen herkömmlichen Teilen beeinflußt. Am einfachsten ist es, die Zuleitung so anzuordnen, dass sie den Randbereich des Unterteils durchquert. Vorzugsweise sind die Gestalt des Unterteils des Druckknopfes und der Gehäuseöffnung, in welche der Druckknopf eingesetzt wird, so aufeinander abgestimmt, dass zwischen dem Unterteil und dem Gehäuse des Winkelstücks ein Ringkanal vorgesehen ist, der Bestandteil der Zuleitung ist. Das hat zum einen den Vorteil, dass man beim Einsetzen des Druckknopfes in das Gehäuse nicht auf eine bestimmte Orientierung achten muss, um den Eintrittsquerschnitt der im Druckknopfunterteil verlaufenden Zuleitung mit dem Austrittsquerschnitt der im Gehäuse verlaufenden Zuleitung zur Deckung zu bringen, und hat zum andern den Vorteil, dass von diesem Ringkanal mehrere Stichleitungen in den Raum zwischen Unterteil und Oberteil des Druckknopfes führen können, welche jeweils für sich genommen einen kleinen lichten Querschnitt haben, aber zusammengenommen doch ausreichend viel Kühlflüssigkeit durchlassen. Bei Winkelstücken mit sehr kleinem Kopf kann es jedoch vorteilhafter sein, aus Platzgründen auf den Ringkanal zu verzichten.

Prinzipiell genügt es, wenn das Oberteil nur am Rand festgelegt ist; drückt man auf das Oberteil, dann hat man gemäss dem Abstand zwischen Oberteil und Unterteil zunächst einen Leerhub, bis das Unterteil ausgelenkt werden kann und seinerseits auf die Spannvorrichtung einwirkt. Vorzugsweise vermeidet man jedoch den Leerhub dadurch, dass man im Umgebungsbereich des Fortsatzes des Unterteils einen oder mehrere Füße vorsieht, über welche sich das Oberteil auf dem Unterteil abstützt. Die Füße können entweder am Oberteil oder am Unterteil angebracht sein. Sie stehen in der Zuleitung, ohne den Strömungsweg zu blockieren.

Ein weiterer Vorteil der Erfindung liegt darin, dass man in einem erfindungsgemäss ausgebildeten Winkelstück nicht nur von innen zu kühlende Werkzeuge, sondern auch von aussen zu kühlende Werkzeuge benutzen kann, es ist sogar möglich, die Innenkühlung und die Aussenkühlung in Kombination in Anwendung zu bringen und dadurch die Kühlung besonders effektiv zu gestalten. Dazu ist es lediglich erforderlich, an der Vorderseite des Kopfteils in an sich bekannter Weise eine oder mehrere Düsen für eine Aussenkühlung des Werkzeuges anzuordnen und diese entweder durch eine gesonderte, im Winkelstück verlaufende Zuleitung zu versorgen oder die Düsen und das hohle Werkzeug durch eine gemeinsame, sich im Winkelstück verzweigende Zuleitung mit dem Kühlmittel zu speisen, wobei die zuletzt genannte Möglichkeit die einfachere ist, wohingegen die zuerst genannte Möglichkeit den Vorteil hat, dass man die Innenkühlung und die Aussenkühlung nach Wahl zu- und abschalten kann.

Als Kühlflüssigkeit wird üblicherweise Wasser verwendet, doch läßt sich das Winkelstück - wenn medizinisch angezeigt - auch mit anderen Kühlflüssigkeiten oder auch mit Druckluft als Kühlmittel betreiben, weswegen dafür im Patentanspruch allgemein der Begriff Kühlfluid verwendet wurde.

Eine weitere vorteilhafte Weiterbildung der Erfindung besteht darin, dass man bei einem Winkelstück, welches in an sich bekannter Weise ausser einer Wasserzuleitung auch eine Druckluftzuleitung hat, den Dichtspalt am Übergang vom Druckknopf zur Spannvorrichtung bzw. zum Werkzeug durch eine dorthin führende Druckluft-Zweigleitung unter erhöhten Aussendruck setzt und dadurch berührungslos eine Wasserleckage verhindert. Bei Winkelstücken ohne Druckluftzufuhr kann man ein entsprechendes Ergebnis erreichen, wenn man den Übergang vom Druckknopf zum Werkzeug als Wasserstrahlpumpe ausbildet, deren Saugseite mit dem Dichtspalt verbunden ist.

Ausführungsbeispiele der Erfindung sind in den beigefügten Zeichnungen dargestellt. Gleiche oder einander entsprechende Teile sind in den verschiedenen Ausführungsbeispielen mit übereinstimmenden Bezugszahlen bezeichnet.
- Figur 1: zeigt schematisch ein erstes Winkelstück im Längsschnitt, in ungefähr 10-facher Vergrößerung,
- Figur 2: zeigt als Detail aus Figur 1 das Unterteil des Druckknopfes und seine Verbindung mit einem Werkzeug, das ganze im Längsschnitt,
- Figur 3: ist eine Detaildarstellung wie Figur 2, aber mit abgewandeltem Unterteil,
- Figur 4: ist eine Detailzeichnung wie Figur 2, aber mit einem weiteren abgewandelten Unterteil und mit abgewandeltem Werkzeug,
- Figur 5: ist eine Detailzeichnung wie Figur 2 mit nochmals abgewandeltem Unterteil und Werkzeug,
- Figur 6: ist eine Detailzeichnung wie Figur 2, aber mit abgewandeltem Druckknopfunterteil und abgewandeltem Werkzeug,
- Figur 7: zeigt den Druckknopf aus Figur 6 eingesetzt in ein Winkelstück im Längsschnitt,
- Figur 8: zeigt sehr schematisch ein Winkelstück mit der Möglichkeit zur Innenkühlung und zur Aussenkühlung, die beide über eine gemeinsame Zuleitung versorgt werden,
- Figur 9: zeigt sehr schematisch im Längsschnitt ein weiteres Winkelstück mit der Möglichkeit einer Innenkühlung und Aussenkühlung des Werkzeuges, die durch eine gemeinsame, sich verzweigende Zuleitung gespeist werden,
- Figur 10: zeigt ein weiteres Winkelstück schematisch im Längsschnitt, mit der Möglichkeit der Luftdruckbeaufschlagung des Dichtspaltes,
- Figur 11: zeigt den Querschnitt XI-XI gemäss Figur 10,
und
- Figur 12: zeigt den Querschnitt XII-XII gemäss Figur 10.

Gleiche oder einander entsprechende Teile sind in den Beispielen mit übereinstimmenden Bezugszahlen bezeichnet.

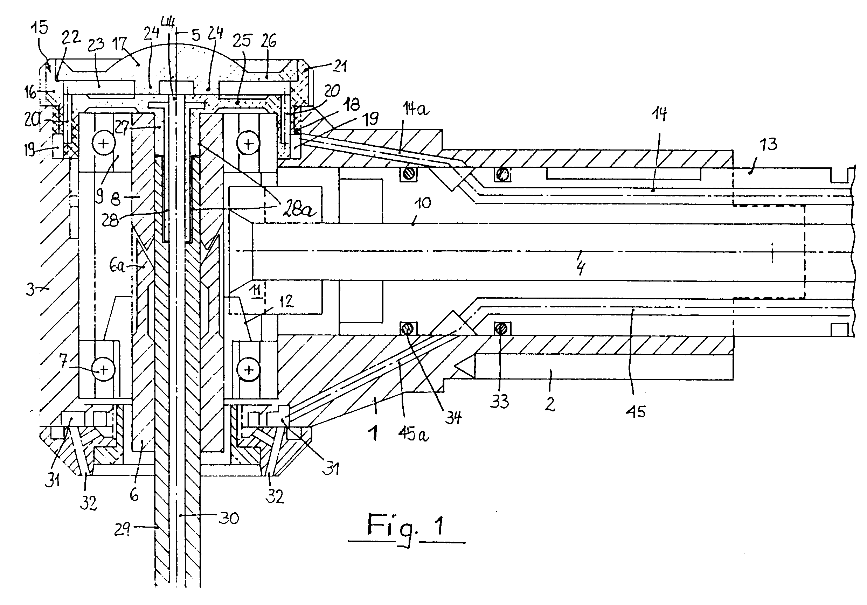

Das in Figur 1 dargestellte Winkelstück hat ein Gehäuse 1, bestehend aus einem Schaftteil 2 und einem Kopfteil 3, welche mit ihrem Getriebeachsen 4 und 5 einen rechten Winkel miteinander einschließen. Im Kopfteil 3 ist eine Spannzange 6 über ein Kugellager 7 drehbar gelagert. In die sich keilförmig öffnenden Spannfinger 6a greift eine keilförmig zulaufende Hülse 8 ein, welche über ein Kugellager 9 drehbar im Kopfteil gelagert ist. Die Spannzange 6 wird durch eine im Schaftteil 2 gelagerte Welle 10 und Getriebezahnräder 11 und 12 angetrieben.

Im Schaftteil 2 des Gehäuses steckt ein Schaft 13, der nach hinten aus dem Gehäuse vorsteht und dazu dient, das Winkelstück in einen zugehörigen Handgriff zu stecken (nicht dargestellt). Im Schaft verlaufen längs zwei Zuleitungen 14 und 45, von denen die eine über einen in der Gehäusewand verlaufenden Abschnitt 14a in einen Druckknopf 15 einmündet, welcher die Rückseite (Oberseite) des Kopfteils 3 verschließt. Der Druckknopf ist aus thermoplastischem Kunststoff gespritzt und besteht aus einem Unterteil 16 und einem Oberteil 17. Das Unterteil 16 hat ein Aussengewinde 18, mit welchem es in die rückseitige Gehäuseöffnung im Kopfteil 3 eingeschraubt ist. Unterhalb des Gewindes 18 ist der Aussendurchmesser des Unterteils 16 verringert, wodurch zwischen dem Unterteil 16 und dem Gehäuse ein Ringkanal 19 gebildet ist, in welchen der Abschnitt 14a der Zuleitung 14 einmündet. Von diesem Ringkanal führen mehrere Stichleitungen 20 parallel zur Achse 5 durch das Unterteil 16 hindurch auf dessen Oberseite, die von einem hochstehenden Rand 21 eingerahmt ist, in welchen auf eine Stufe 22 mit einem leichten Hinterschnitt das Oberteil 17 eingepreßt ist, wobei zwischen Oberteil und Unterteil eine Kammer 23 verbleibt, die eine Fortsetzung des Kanals 14 ist. Das Oberteil 17 stützt sich über einen Fortsatz, gebildet durch zwei Füße 24, die nicht weit von der Achse 5 angeordnet sind, auf dem Unterteil 16 ab. Sowohl Unterteil als auch Oberteil haben zwischen ihrem Randabschnitt und ihrem Mittelabschnitt einen Abschnitt 25 bzw. 26 mit nur dünner Wandstärke, wodurch der Druckknopf 15 so flexibel wird, dass die Druckfunktion leicht ausgeübt werden kann. Das Unterteil 16 hat in der Mitte einen nach unten abstehenden Fortsatz 27, in welchen eine Metallhülse 28 eingefügt ist, welche nach unten hin aus dem Kunststofffortsatz 27 vorsteht.

Die Hülse 28 steckt mit ihrem vorstehenden Abschnitt in der Bohrung eines auf ganzer Länge durchbohrten Werkzeuges 29, welches in der Spannzange 6 festgelegt ist. Die Bohrung 30 des Werkzeuges ist zu diesem Zweck im hinteren Abschnitt des Werkzeuges aufgebohrt, um es möglich zu machen, dass der Innendurchmesser der Hülse 28 derselbe ist wie der Innendurchmesser der Bohrung 30 im vorderen Abschnitt des Werkzeuges 29. Zwischen der Hülse 28 und dem Werkzeug 29 sowie zwischen dem Fortsatz 27 und der Spannvorrichtung 8 besteht ein langgestreckter Ringspalt 28a, den das Wasser nur schwerlich überwinden kann.

Durch die Zuleitung 14, 14a, durch den Ringkanal 19, die Stichleitungen 20 und die Kammer 23 kann Kühlflüssigkeit durch den Auslaß 44 in die Hülse 28 und von dort in die Bohrung 30 des Werkzeugs 29 eindringen.

Eine an den Fortsatz 27 angrenzende Schulter des Unterteils 16 liegt an der Rückseite der Hülse 8 an. Dadurch wird, wenn der Druckknopf niedergedrückt wird, die Hülse 8 mit ihrer keilförmigen Spitze zwischen die Finger 6a der Spannzange gedrückt und spreizt diese ein wenig, wodurch das Werkzeug 29 freigegeben wird und zum Austausch herausgezogen werden kann.

Die zweite Zuleitung 45 mündet über einen in der Gehäusewand verlaufenden Abschnitt 15a in einen Ringkanal 31, welcher mehrere gegen die Aussenseite des Werkzeugs 29 gerichtete Düsen 32 speist.

Der Übergang von den Zuleitungen 14 und 45 zu deren Abschnitten 14a und 45a ist durch O-Ringe 33 und 34 abgedichtet.

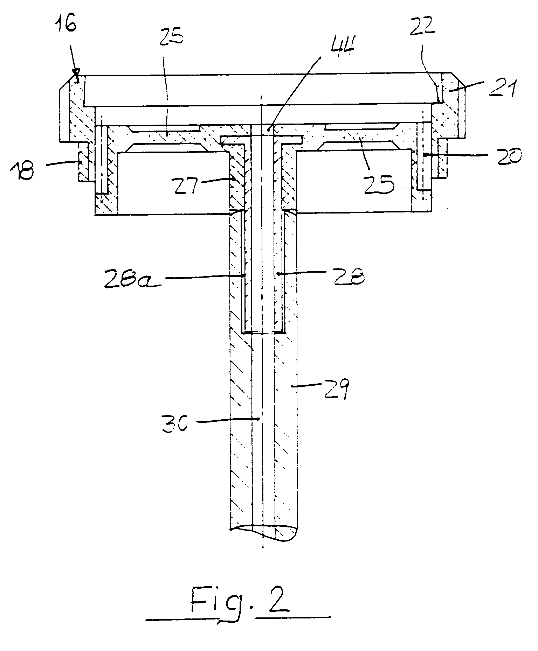

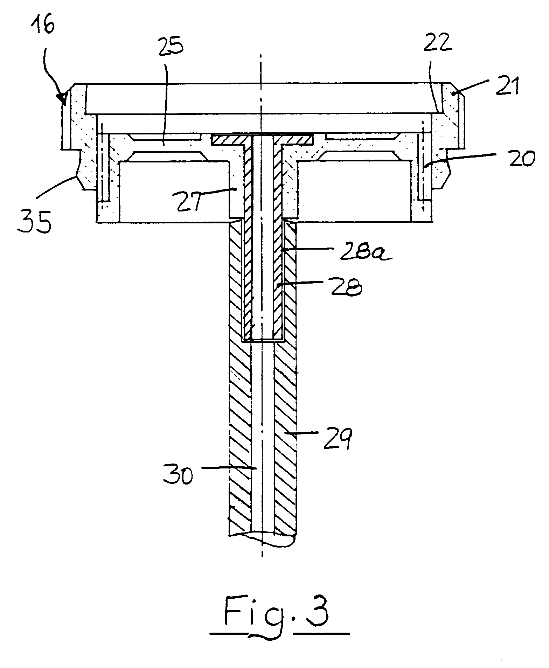

Das in Figur 3 dargestellte Unterteil 16 des Druckknopfes unterscheidet sich von dem in Figur 1 und Figur 2 dargestellten Unterteil darin, dass das Metallröhrchen 28, welches in den Kunststoffortsatz 27 eingefügt ist, einen Flansch hat, der nicht vom Kunststoff umspritzt ist, sondern in einer Ausnehmung auf der Oberseite des Unterteils liegt und dort eingepreßt oder eingeklebt ist. Weiterhin unterscheidet sich dieses Unterteil von dem aus Figur 1 dahingehend, dass es kein Aussengewinde, sondern an dessen Stelle eine nach aussen vorspringende Wulst 35 hat, mit welcher es in die rückseitige Öffnung des Kopfteils 3 eingepreßt wird.

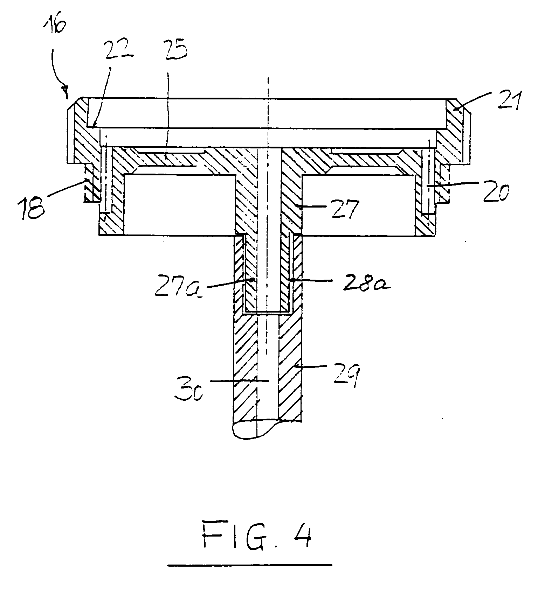

Das in Figur 4 dargestellte Unterteil unterscheidet sich von dem in Figur 2 dargestellten dadurch, dass anstelle des Metallröhrchens 28 der Fortsatz 27 aus Kunststoff verlängert ist und einen weiteren Fortsatz 27a mit vermindertem Durchmesser hat, so dass er in das aufgebohrte hintere Ende des Werkzeuges 29 paßt.

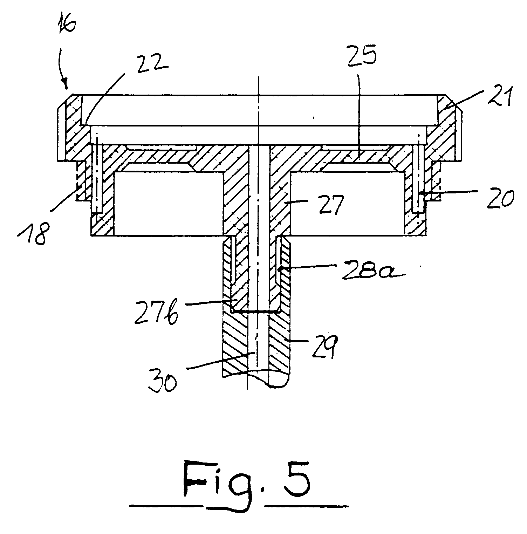

Das in Figur 5 dargestellte Druckknopfunterteil unterscheidet sich von dem in Figur 4 darin, dass der Fortsatz 27a am unteren Ende eine äussere Ringwulst 27b hat, die so bemessen ist, dass sie auf Passung im aufgebohrten Ende des Werkzeugs 29 steckt und dadurch die Verbindungsstelle gut abdichtet.

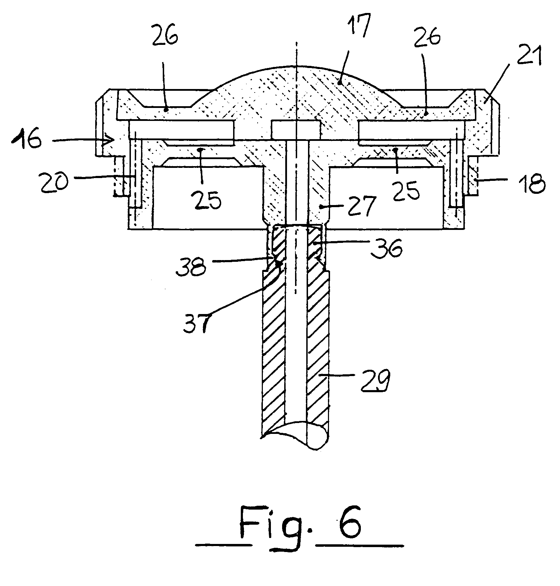

Das in Figur 6 dargestellte Ausführungsbeispiel unterscheidet sich von dem in Figur 5 dargestellten darin, dass das Werkzeug 29 am hinteren Ende abgedreht und zu einem Nippel 36 mit Hinterschnitt 37 geformt ist. Der Nippel 36 steckt in dem mit entsprechender Innenkontur mit nach innen weisendem Vorsprung 38 ausgebildeten unteren Ende des Fortsatzes 27, welcher dort mit so geringer Wandstärke ausgeführt ist, dass diese ohne Schlitzung unter elastischer Aufweitung auf den Nippel 36 aufgeschoben werden kann und dadurch einen dichten Anschluß schafft.

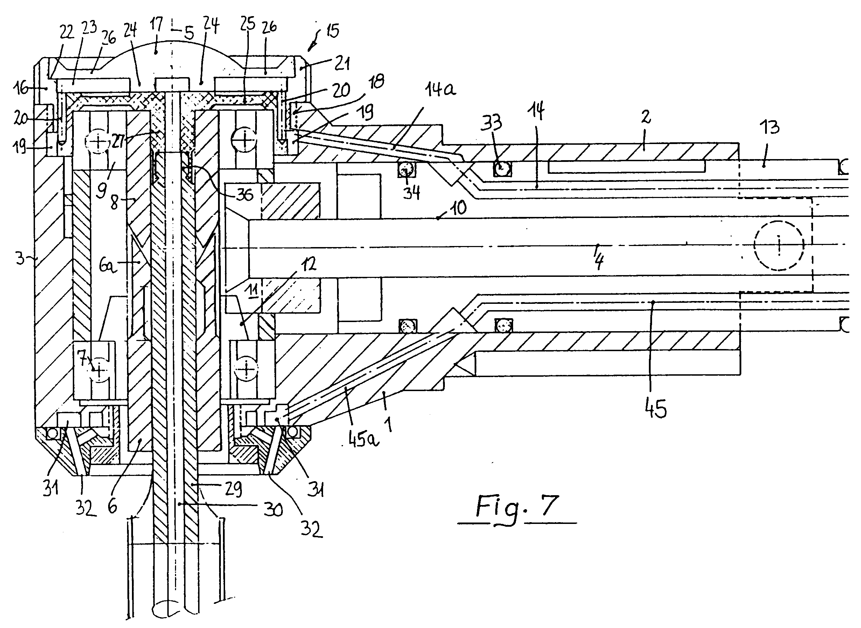

Figur 7 zeigt den in Figur 6 dargestellten Druckknopf eingebaut in das Gehäuse aus Figur 1.

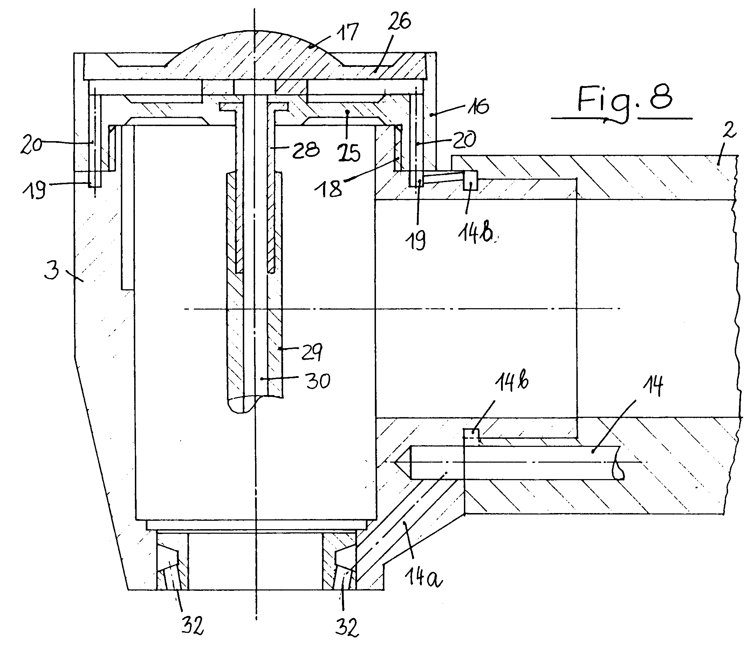

Das in Figur 8 dargestellte Ausführungsbeispiel eignet sich vor allem für ein Winkelstück mit Turbinenantrieb. Die Antriebselemente einschl. der Spannvorrichtung sind aus Gründen der Übersichtlichkeit nicht dargestellt. Das Druckknopfunterteil unterscheidet sich von dem aus Figur 1 darin, dass es nicht in ein Innengewinde des Gehäuses 1 , sondern auf ein Aussengewinde des Gehäuses aufgeschraubt ist. Im Schaftteil des Gehäuses verläuft nur eine einzige Zuleitung 14, welche über eine Ringleitung 14b sowohl die Düsen 32 an der Vorderseite des Kopfteils, als auch die Bohrung 30 im Werkzeug 29 speist.

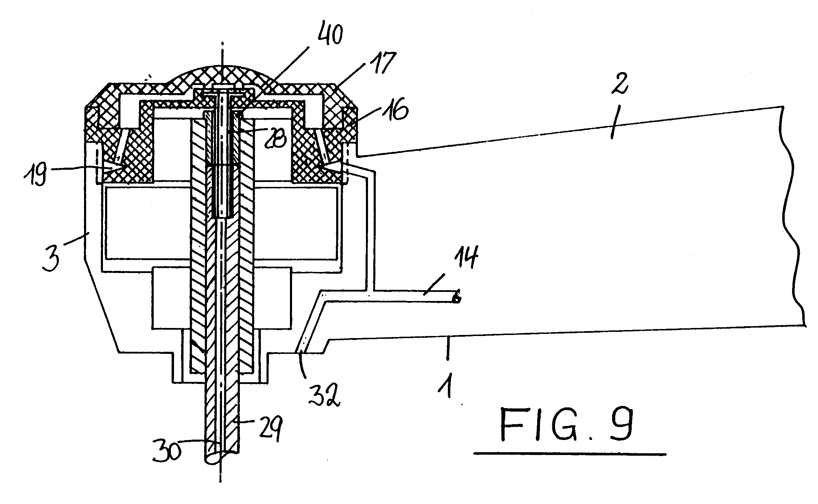

Das in Figur 9 dargestellte Ausführungsbeispiel eignet sich ebenfalls besonders für ein Winkelstück mit Turbinenantrieb. Es unterscheidet sich von dem in Figur 1 dargestellten Winkelstück im wesentlichen durch ein im Aussenbereich massiveres Unterteil 16 des Druckknopfes 16, welches an seiner Unterseite keinen Kunststoffortsatz hat, sondern stattdessen eine gesonderte gehäusefeste Führung 40 für das Metallröhrchen 28. Sowohl die für die Aussenkühlung des Werkzeuges 29 vorgesehene Düse 32 als auch die Bohrung 30 des Werkzeugs werden über eine gemeinsame, sich im Schaftteil 2 verzweigende Zuleitung 14 mit Kühlflüssigkeit gespeist.

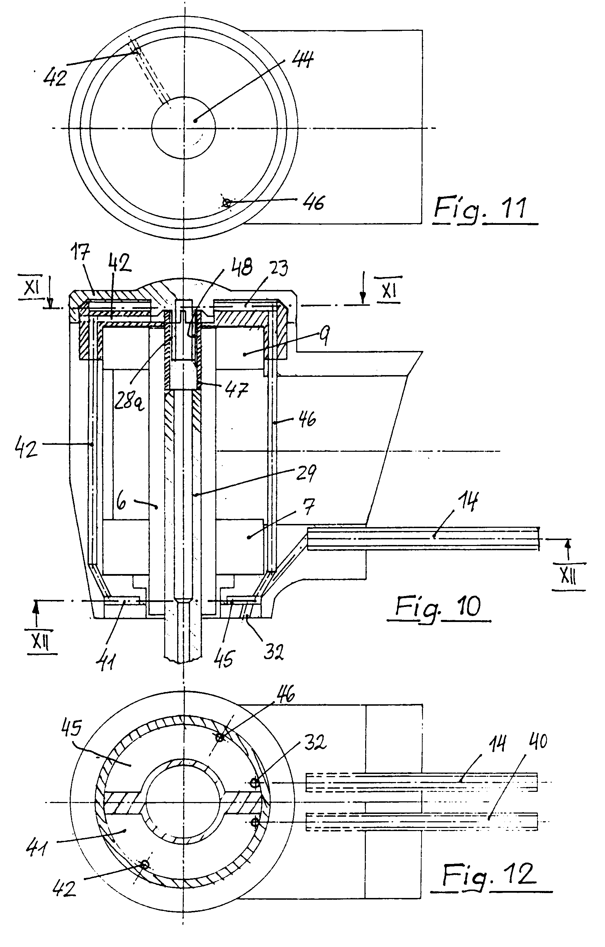

Das in den Figuren 10 bis 12 dargestellte Winkelstück hat eine Zuleitung 40 für Druckluft, welche in einen halbringförmigen Raum 41 im Kopfteil 3 nahe bei dessen Vorderseite mündet. Vom Raum 41 führt eine Zweigleitung 42 aufwärts in das Unterteil 16 des Druckknopfes und mündet dort in einen zentralen Ringraum 43, welcher den Auslaß 44 umgibt und durch den zentralen Fortsatz 24 des Oberteils 17 abgeschlossen ist. In diesen Ringraum 43 mündet der Ringspalt 28a, der dadurch von aussen unter Druck gesetzt werden kann, um jegliche Leckage zu verhindern.

Die Zuleitung 14 für Wasser führt ebenfalls in einen Halbringraum 45 an der Spitze des Kopfteils 3; von dort führt eine Zweigleitung 46 in das Druckknopf-Unterteil 16. In der Spannvorrichtung 6 steckt eine Metallhülse 47, welche bis zur Unterseite des Oberteils 17 führt und ihrerseits unter Bildung des Dichtspalts 28a einen hülsenförmigen Fortsatz 48 des Oberteils 17 aufnimmt.

## Patentansprüche

1. Winkelstück für den zahnärztlichen Bedarf
mit einem Gehäuse (1), welches aus einem Kopfteil (3) und einem Schaftteil (2) besteht,
mit einer im Kopfteil (3) untergebrachten, drehbar angetriebenen Spannvorrichtung (6) zum Einspannen eines Bohr-, Fräs- oder Schleifwerkzeugs (29), welches von der Vorderseite des Kopfteils (3) her in die Spannvorrichtung (6) einzuführen ist und eine längs durchgehende Bohrung (30) hat,
mit einem an der Rückseite des Kopfteils (3) vorgesehenen Druckknopf (15), welcher mittelbar oder unmittelbar auf die Spannvorrichtung (6) einwirkt und sie bei Niederdrücken des Druckknopfes (15) gegen Federkraft öffnet,
und mit einer im Schaftteil (2) und Kopfteil (3) verlaufenden Zuleitung (14, 14a, 19, 20, 23) für ein Kühlfluid, die durch den Druckknopf (15) hindurchführt und von hinten in die Bohrung (30) des Werkzeugs (29) mündet, zu welchem Zweck der Druckknopf (15) einen Fortsatz hat, der unter Bildung eines Ringspaltes (28a) in eine Hülse (27) der Spannvorrichtung (6) hineinragt,
**dadurch gekennzeichnet,** dass der Druckknopf (15) aus einem die Rückseite des Kopfteils (3) dicht abschließenden Oberteil (17), welches durch einen Membranbereich (26) reversibel verformbar ist, und aus einem Unterteil (16) besteht, welches den die Spannvorrichtung (6) enthaltenden Innenraum des Kopfteils (3) zur Rückseite hin abschließt, wobei die Zuleitung (20, 23) durch das Unterteil (16) hindurch in den Zwischenraum (23) zwischen Unterteil (16) und Oberteil (17) geführt ist und diesen Zwischenraum (23) durch einen in der Mitte des Unterteils (16) vorgesehenen Auslaß (44) wieder verläßt und im Nahbereich dieses Auslasses (44) das Oberteil (17) an seiner Unterseite einen oder mehrere Fortsätze (24) hat, die einerseits die Verbindung vom Zwischenraum (23) zum Auslaß (44) offen halten und sich andererseits entweder auf dem Unterteil (16) abstützen und dieses bei Druck auf das Oberteil (17) reversibel auslenken oder als Teil der Zuleitung (23, 30) unter Bildung eines Ringspaltes (28a) durch den Auslaß (44) hindurchgreift bzw. hindurchgreifen.

2. Winkelstück nach Anspruch 1, **dadurch gekennzeichnet,** dass der Druckknopf (15) in der Flucht der Spannvorrichtung (6) einen sich in die Bohrung (30) des Werkzeugs (29) erstreckenden hohlen Fortsatz (27, 28) hat.

3. Winkelstück nach Anspruch 2, **dadurch gekennzeichnet,** dass das Werkzeug (29) von hinten her auf einen größeren Durchmesser als vorne aufgebohrt ist, so dass der Strömungsquerschnitt durch den Fortsatz (27) und das Werkzeug (29) hindurch gleich bleibt.

4. Winkelstück nach Anspruch 2 oder 3, **dadurch gekennzeichnet,** dass der Fortsatz (27) an seiner Spitze eine Wulst (27b) hat, deren Aussendurchmesser auf Passung mit der Bohrung (30) im Werkzeug (29) gearbeitet ist.

5. Winkelstück nach einem der vorstehenden Ansprüche, **dadurch gekennzeichnet,** dass der Druckknopf (15) einen hohlen Fortsatz (27) hat, welcher das hintere Ende des Werkzeugs (30) aufnimmt.

6. Winkelstück nach Anspruch 5, **dadurch gekennzeichnet,** dass am hinteren Ende des Werkzeugs (29) aussenseitig ein Hinterschnitt (37) vorgesehen ist, in welchen ein dazu passender, auf der Innenseite des Fortsatzes (27) gebildeter Vorsprung (38) einrastet, so dass der Fortsatz (27) das Werkzeug (29) dicht umschließt.

7. Winkelstück nach einem der Ansprüche 2 bis 6, **dadurch gekennzeichnet,** dass in Längsrichtung des Fortsatzes (27) zwischen diesem und dem Werkzeug (29) ein Spiel vorhanden ist.

8. Winkelstück nach einem der vorstehenden Ansprüche**, dadurch gekennzeichnet,** dass der Druckknopf (15) aus thermoplastischem Kunststoff besteht.

9. Winkelstück nach Anspruch 8, **dadurch gekennzeichnet,** dass in den im übrigen aus Kunststoff bestehenden Fortsatz (27) ein vorspringendes Metallröhrchen (28) eingeführt ist.

10. Winkelstück nach einem der vorstehenden Ansprüche, **dadurch gekennzeichnet,** dass die Zuleitung (20) den Randbereich des Unterteils (16) durchquert.

11. Winkelstück nach Anspruch 10, **dadurch gekennzeichnet,** dass zwischen dem Unterteil (16) des Druckknopfes und dem Gehäuse (1) des Winkelstücks ein Ringkanal (19) vorgesehen ist, der Bestandteil der Zuleitung ist.

12. Winkelstück nach einem der vorstehenden Ansprüche, **dadurch gekennzeichnet,** dass an der Vorderseite des Kopfteils (3) eine oder mehrere Düsen (32) für eine Aussenkühlung des Werkzeugs (30) angeordnet sind.

13. Winkelstück nach Anspruch 12, **dadurch gekennzeichnet,** dass die Düsen (32) durch eine gesonderte, getrennt absperrbare Zuleitung (45, 45a) im Winkelstück mit Kühlfluid versorgt werden.

14. Winkelstück nach Anspruch 12, **dadurch gekennzeichnet,** dass die Düsen (32) und das hohle Werkzeug (29) durch eine gemeinsame, sich im Winkelstück verzweigende Zuleitung (14) gespeist werden.

15. Winkelstück mit einer in das Kopfteil (3) führenden Druckluftzuleitung (40) nach einem der vorstehenden Ansprüche, **dadurch gekennzeichnet,** dass eine Druckluft-Zweigleitung (42) zur Aussenseite des Ringspaltes (28a) führt.

16. Winkelstück nach einem der Ansprüche 1 bis 14, **dadurch gekennzeichnet,** dass der Zuleitungsabschnitt zwischen Druckknopf (15) und Werkzeug (29) als Strahlpumpe ausgebildet ist, deren Saugseite mit dem Ringspalt (28a) verbunden ist.

## Claims

1. Angle piece for dental use having
a housing (1) comprising a head portion (3) and a shaft portion (2),
a rotatably driven clamping means (6) accommodated in said head portion (3) and intended for clamping a drilling, milling or grinding tool (29) that can be inserted into said clamping means (6) from the front of said head portion (3) and is provided with a longitudinal through-bore (30),
a push key (15) provided on the rear end of said head portion (3) and acting directly or indirectly on said clamping means (6) for opening it against the action of a spring when said push key (15) is pressed,
and a cooling fluid supply line (14, 14a, 19, 20, 23) extending through said shaft portion (2) and said head portion (3) and opening from the rear into said bore (30) of said tool (29), said push key (15) being provided for this purpose with an extension that projects into a sleeve (27) of said clamping means (6), thereby forming an annular gap (28a),
**characterised in that** said press key (15) consists of an upper part (17), which tightly closes off the rear end of said head portion (3) and can be reversibly deformed by a diaphragm portion (26), and a lower part (16), which tightly closes off at the rear the inner space of said head portion (3) accommodating said clamping means (6), said supply line (22, 23) extending through said lower part (16) into the intermediate space (23) between said lower part (16) and said upper part (17) and leaving said intermediate space (23) through an outlet (44) provided in the middle of said lower part (16), and said upper portion (17) being provided on its lower face, in an area close to said outlet (44), with one or more extensions (24) which on the one hand keep open the connection between said intermediate space (23) and said outlet (24) and, on the other hand, either rest upon said lower part (16) thereby deflecting it reversibly when pressure is exerted upon said upper part (17), or project, as part of said supply line (23, 30), through said outlet (44) thereby forming an annular gap (28a).

2. Angle piece according to claim 1, **characterised in that** said press key (15) comprises a hollow extension (27, 28), extending into said bore (30) of said tool (29) in alignment with said clamping means (6).

3. Angle piece according to claim 2, **characterised in that** the bore in said tool (29) has a larger diameter at its read end than at its front end so that the flow cross-section remains the same through both said extension (27) and said tool (29).

4. Angle piece according to claim 2 or 3, **characterised in that** the tip of said extension (27) is provided with a projecting edge (27b), whose outer diameter is made to fit said bore (30) in said tool (29).

5. Angle piece according to any of the preceding claims, **characterised in that** said press key (15) comprises a hollow extension (27) for receiving the rear end of said tool (30).

6. Angle piece according to claim 5, **characterised in that** an undercut is provided on the outside of the rear end of said tool (29), which is engaged in locking relationship by a matching projection (38) provided on the inside of said extension (27) so that said tool (29) is tightly embraced by said extension (27).

7. Angle piece according to any of claims 2 to 6, **characterised in that** a certain play exists in the longitudinal direction of said extension (27) between the latter and said tool (29).

8. Angle piece according to any of the preceding claims, **characterised in that** said press key (15) is made from a thermoplastic plastics material.

9. Angle piece according to claim 8, characterised in that a small projecting metal tube (28) is inserted into said projection (27), which otherwise is made from a plastics material.

10. Angle piece according to any of the preceding claims, **characterised in that** said supply line (20) passes through the marginal portion of said lower part (16).

11. Angle piece according to claim 10, **characterised in that** an annular channel (19), being part of the supply line, is formed between said lower part (16) of said press key and said housing (1) of the angle piece.

12. Angle piece according to any of the preceding claims, **characterised in that** one or more nozzles (32), intended to provide for external cooling of said tool (30), are provided on the front end of said head portion (3).

13. Angle piece according to claim 12, **characterised in that** said nozzles (32) are supplied with cooling fluid through a separate supply line (45, 45a) in the angle piece, that can be shut off separately.

14. Angle piece according to claim 12, **characterised in that** said nozzles (32) and said hollow tool (29) are supplied by a common supply line (14), with branches being formed in the angle piece.

15. Angle piece having a compressed-air supply line (40) leading into said head portion (3), according to any of the preceding claims, **characterised in that** a compressed-air branch line (42) leads to the outside of the annular gap (28a).

16. Angle piece according to any of claims 1 to 4, **characterised in that** the supply line section between said press key (15) and said tool (29) is designed as jet pump which has its intake end connected with the annular gap (28a).

## Revendications

1. Raccord angulaire pour les besoins dentaires, comprenant
un logement (1) qui est constitué par une partie de tête (3) et par une partie de queue (2),
un dispositif de serrage (6) disposé dans la partie de tête (3) et entraîné en rotation, pour que vienne s'y encastrer un outil d'alésage, de fraisage ou de meulage (29) qui doit venir s'insérer à partir du côté avant de la partie de tête (3) dans le dispositif de serrage (6) et qui possède un alésage (30) s'étendant en direction longitudinale,
un bouton-poussoir (15) prévu sur le côté dorsal de la partie de tête (3) qui agit indirectement ou directement sur le dispositif de serrage (6) et l'ouvre lorsqu'on enfonce le bouton-poussoir (15) à l'encontre de la force exercée par le ressort,
et un conduit (14, 14a, 19, 20, 23) s'étendant dans la partie de queue (2) et dans la partie de tête (3), destiné à un liquide de refroidissement, qui traverse le bouton-poussoir (15) et débouche, par l'arrière, dans l'alésage (30) de l'outil (29), le bouton-poussoir (15) possédant à cet effet un prolongement qui pénètre en formant un passage annulaire (28a) dans un manchon (27) du dispositif de serrage (6),
caractérisé en ce que le bouton-poussoir (15) est constitué par une partie supérieure (17) qui obture de manière étanche le côté dorsal de la partie de tête (3) et qui peut subir une déformation dans le sens inverse à travers une zone membranaire (26), et par une partie inférieure qui obture, en direction du côté dorsal, l'espace interne de la partie de tête (3) renfermant le dispositif de serrage (6), dans lequel le conduit (20, 23) est guidé à travers la partie inférieure (16) pour aboutir dans l'espace intermédiaire (23) entre la partie inférieure (16) et la partie supérieure (17), et quitte à nouveau cet espace intermédiaire (23) en passant par une sortie (44) prévue au centre de la partie inférieure (16), la partie supérieure (17) possédant, à proximité de cette sortie (44), sur son côté inférieur, une ou plusieurs saillies (24) qui, d'une part, maintiennent ouverte la liaison entre l'espace intermédiaire (23) et la sortie (44) et, d'autre part, soit s'appuient sur la partie inférieure (16) et dévient cette dernière de manière réversible via une pression s'exerçant sur la partie supérieure (17), soit traversent la sortie (44) comme partie du conduit (23, 30) en formant un espace annulaire (28a).

2. Raccord angulaire selon la revendication 1, caractérisé en ce que le bouton-poussoir (15) possède, à fleur avec le dispositif de serrage (6), un prolongement creux (27, 28) s'étendant dans l'alésage (30) de l'outil (29).

3. Raccord angulaire selon la revendication 2, caractérisé en ce que l'outil (29) présente, à partir de l'arrière, un diamètre supérieur à celui de l'avant, si bien que la section d'écoulement reste la même à travers le prolongement (27) et l'outil (29).

4. Raccord angulaire selon la revendication 2 ou 3, caractérisé en ce que le prolongement (27) possède, à son extrémité, un bourrelet (27b) dont le diamètre externe a été usiné pour correspondre à l'alésage (30) dans l'outil (29).

5. Raccord angulaire selon l'une quelconque des revendications précédentes, caractérisé en ce que le bouton-poussoir (15) possède un prolongement creux (27) dans lequel vient se loger l'extrémité arrière de l'outil (30).

6. Raccord angulaire selon la revendication 5, caractérisé en ce que, contre l'extrémité arrière de l'outil (29), on prévoit, côté externe, une contre-dépouille (37) dans laquelle vient s'encliqueter une saillie (38) formée sur le côté interne du prolongement (27), correspondant à ce dernier, de telle sorte que le prolongement (27) renferme l'outil (29) de manière étanche.

7. Raccord angulaire selon l'une quelconque des revendications 2 à 6, caractérisé en ce qu'un jeu est présent en direction longitudinale du prolongement (27) entre ce dernier et l'outil (29).

8. Raccord angulaire selon l'une quelconque des revendications précédentes, caractérisé en ce que le bouton-poussoir (15) est constitué d'une matière synthétique thermoplastique.

9. Raccord angulaire selon la revendication 8, caractérisé en ce qu'on insère dans le prolongement (27) constitué par ailleurs d'une matière synthétique, un petit tube métallique (28) faisant saillie.

10. Raccord angulaire selon l'une quelconque des revendications précédentes, caractérisé en ce que le conduit (20) traverse la zone marginale de la partie inférieure (16).

11. Raccord angulaire selon la revendication 10, caractérisé en ce que, entre la partie inférieure (16) du bouton-poussoir et le logement (1) du raccord angulaire, on prévoit un canal annulaire (19) qui fait partie du conduit.

12. Raccord angulaire selon l'une quelconque des revendications précédentes, caractérisé en ce qu'une ou plusieurs tuyères (32) destinées à un refroidissement externe de l'outil (30) sont disposées sur le côté avant de la partie de tête (3).

13. Raccord angulaire selon la revendication 12, caractérisé en ce que les tuyères (32) sont alimentées avec un fluide de refroidissement via un conduit supplémentaire séparé obturable (45, 45a) dans le raccord angulaire.

14. Raccord angulaire selon la revendication 12, caractérisé en ce que les tuyères (32) et l'outil creux (29) peuvent être alimentés via un conduit commun (14) qui se ramifie dans le raccord angulaire.

15. Raccord angulaire comprenant un conduit d'air sous pression (40) menant à la partie de tête (3), selon l'une quelconque des revendications précédentes, caractérisé en ce qu'un conduit ramifié d'air sous pression (42) mène au côté externe du passage annulaire (28a).

16. Raccord angulaire selon l'une quelconque des revendications 1 à 14, caractérisé en ce que la section de conduit entre le bouton-poussoir (15) et l'outil (29) est réalisée en forme de pompe à jet dont le côté aspiration est relié au passage annulaire (28a).
